## Europäisches Patentamt

## European Patent Office

## Office européen des brevets

(19)

(11) Veröffentlichungsnummer: **0 189 166**
**B1**

(12) **EUROPÄISCHE PATENTSCHRIFT**

(45) Veröffentlichungstag der Patentschrift:
23.08.89

(51) Int. Cl.⁴: **B 60 R 13/06**

(21) Anmeldenummer: **86100706.0**

(22) Anmeldetag: **20.01.86**

(54) **Vorrichtung zur Führung der Fensterscheibe eines Kraftfahrzeugs.**

(30) Priorität: **22.01.85 DE 3501942**

(43) Veröffentlichungstag der Anmeldung:
**30.07.86 Patentblatt 86/31**

(45) Bekanntmachung des Hinweises auf die Patenterteilung:
**23.08.89 Patentblatt 89/34**

(84) Benannte Vertragsstaaten:
**DE FR GB**

(56) Entgegenhaltungen:
**DE-A-2 912 625**
**FR-A-2 169 607**
**FR-A-2 229 581**

(73) Patentinhaber: **METZELER Gesellschaft mit beschränkter Haftung, Gneisenaustrasse 15, D-8000 München 50 (DE)**

(72) Erfinder: **Brocke, Rolf, Engetsweiler- Strasse 37, D-7988 Neuravensburg (DE)**

(74) Vertreter: **Michelis, Theodor, Dipl.- Ing., Gneisenaustrasse 15, D-8000 München 50 (DE)**

## Beschreibung

Die Erfindung betrifft eine Vorrichtung zur Führung der Fensterscheibe eines Kraftfahrzeuges der im Oberbegriff des Anspruchs 1 angegebenen Gattung.

Im Zuge der Verbesserung der aerodynamischen Eigenschaften eines Kraftfahrzeuges wird angestrebt, die Fenster- und insbesondere die Türscheiben eines Kraftfahrzeuges möglichst weit nach außen zu verlegen. Hierbei treten jedoch Befestigungs- und/oder Führungsprobleme auf, da die zu diesem Zweck üblicherweise eingesetzten Gummi-Profile Platz benötigen und deshalb die angestrebte Verlegung der Scheiben nach außen behindern.

Der Erfindung liegt deshalb die Aufgabe zugrunde, eine Vorrichtung zur Führung der Fensterscheibe eines Kraftfahrzeuges der angegebenen Gattung zu schaffen, die einerseits die exakte Führung der Fensterscheibe gewährleistet und es andererseits ermöglicht, die Fensterscheibe extrem weit nach außen zu verlegen.

Diese Aufgabe wird erfindungsgemäß durch die im kennzeichnenden Teil des Anspruchs 1 angegebenen Merkmale gelöst.

Zweckmäßige Ausführungsformen sind in den Unteransprüchen zusammengestellt.

Die mit der Erfindung erzielten Vorteile beruhen insbesondere darauf, daß eine beflockte Fläche der Metalleinlage, die zur Befestigung des Profils auf der Karosserie des Fahrzeugs dient, als Gleitfläche für die Fensterscheibe eingesetzt wird, so daß man sowohl den Profilquerschnitt als auch die zusätzliche Dichtungslippe, die beispielsweise als Hohlkammer ausgebildet sein kann, klein auslegen kann.

Es hat sich herausgestellt, daß eine Beflockung aus Polyester oder Polyamid, mit einem Haftmittel auf der Basis von Polyurethan auf eine Verstärkungseinlage aus Aluminium oder Stahl mit Haftmittelbeschichtung aufgebracht, ausreichend haftet, so daß diese Beflockung auch nach längerem Betrieb ihre Funktion noch einwandfrei erfüllen kann. Die Fensterscheibe gleitet, ähnlich wie bei der Beflockung des Gummiprofils, problemlos auf dieser Beflockung, die sich auf der frei liegenden Fläche der Metalleinlage befindet, so daß es nicht zu einem direkten Kontakt Metalleinlage/Fensterscheibe kommen kann.

Die Erfindung wird im folgenden anhand von Ausführungsbeispielen unter Bezugnahme auf die beiliegenden, schematischen Zeichnungen näher erläutert. Es zeigen:

Fig. 1 eine Vorrichtung zur Führung der Fensterscheibe eines Kraftfahrzeuges mit einem U-förmigen Gummiprofil,

Fig. 2 eine Modifikation der Ausführungsform nach Fig. 1, bei der die Dichtungslippe durch eine Hohlkammer gebildet ist, und

Fig. 3 eine zweite, für den Dachbereich des Kraftfahrzeuges vorgesehene Ausführungsform des Gummiprofils.

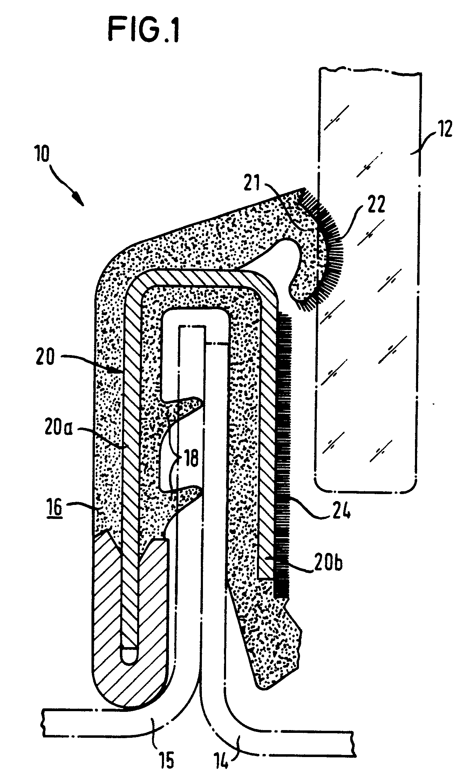

Die aus Figur 1 ersichtliche, allgemein durch das Bezugszeichen 10 angedeutete Vorrichtung zur Führung der Fensterscheibe 12 eines Kraftfahrzeuges weist ein U-förmiges Gummiprofil 16 auf, das durch Innenlippen 18 auf den Blechkanten 14, 15 der Karosserie gehalten ist. In dem U-förmigen Gummiprofil 16 befindet sich eine ebenfalls U-förmige Metalleinlage 20, die durch ein Aluminium-Band gebildet wird.

Wie man aus der Fig. 1 erkennt, hat nur der innere Teil des Gummiprofils 16 U-Form, während sein äußerer Teil, bezogen auf die Fensterscheibe 12, nur an der Innenseite dieser Führungsvorrichtung 10 vorgesehen ist und über der Blechkante 14, 15 in einer an der Fensterscheibe 12 anliegenden Dichtungslippe 21 endet, deren Gleitfläche mit einer Beflockung 22 versehen ist.

Unter der Dichtungslippe 21 liegt also die Außenfläche des Schenkels 20b der Metalleinlage 20 frei und ist mit einer Beflockung 24 versehen. Nur der innere Schenkel 20a der Metalleinlage 20 ist also vollständig von dem Gummiprofil 16 umgeben.

Die mit der Beflockung 24 versehene Fläche des Schenkels 20b der Metalleinlage 20 dient also als Gleitfläche für die Scheibe 12, so daß die Fensterscheibe 12 im Vergleich mit den üblichen Gummiprofilen sehr nahe bei den Blechkanten 14, 15 angeordnet werden kann.

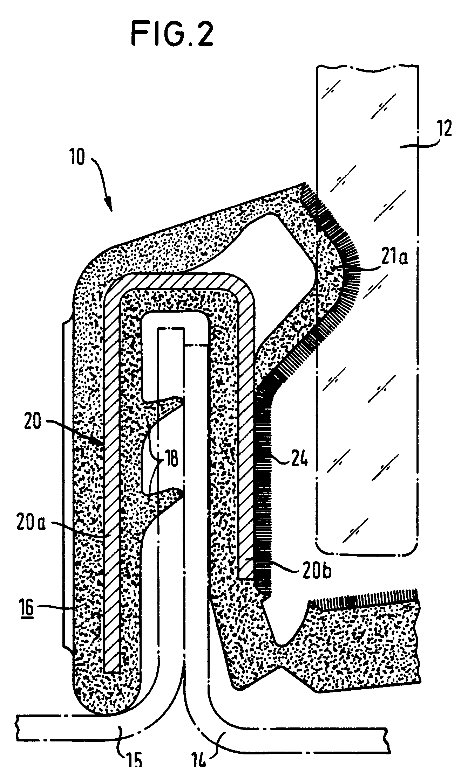

Figur 2 zeigt eine Variante, die sich von der Ausführungform nach Fig 1 nur dadurch unterscheidet, daß die Dichtungslippe 21 mit der Beflockung 22 durch eine Hohlkammer 21a ersetzt ist, d.h. über den beiden Blechkanten 14, 15 verläuft die Außenseite des Gummiprofils 16 etwas nach außen und legt sich dann wieder an den Schenkel 20b der Metalleinlage 20 an, wodurch die aus Fig. 2 ersichtliche Hohlkammer entsteht. Der an der Fensterscheibe 12 anliegende Teil der Kammerwand 21a ist mit einer Beflockung 24 versehen.

Da auf der der Scheibe 12 zugewandten Seite die Außenseite des Gummiprofils 16 am oberen Ende des Schenkels 20b der Metalleinlage 20 endet, geht die Beflockung 24 von der Kammerwand 21a direkt auf die frei liegende Außenfläche des Schenkels 20b der Metalleinlage 20 über, wodurch sich, wie bei der Ausführungsform nach Fig. 1, eine Gleitfläche ohne jede Gummischicht ergibt.

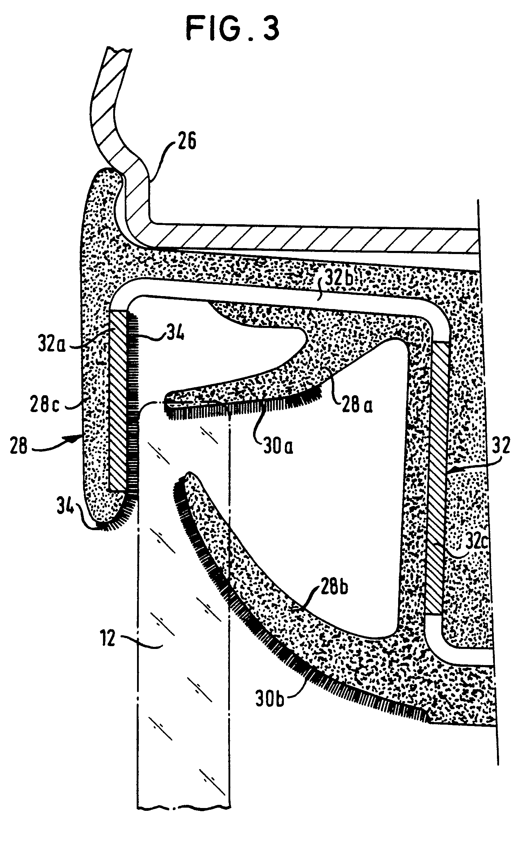

Figur 3 zeigt schließlich eine Ausführungsform, die im Dachbereich einer Kraftfahrzeugtür eingesetzt werden kann. Der das Dach bildende Karosserieteil ist durch das Bezugszeichen 26 angedeutet.

In diesem Bereich befindet sich ein allgemein durch das Bezugszeichen 28 angedeutetes Gummi-Profil, das an dem Dachbereich 26 der Karosserie befestigt ist und die gesamte Oberkante der Fensterscheibe 12 umgibt, abdichtet, hält und führt.

Dieses Gummiprofil 28 ist ebenfalls durch eine Metalleinlage 32 mit Schenkeln 32a, 32b und 32c verstärkt und weist eine an der Innenseite der Fensterscheibe 12 anliegende Dichtungslippe 28b mit einer Beflockung 30b, eine an der Oberkante der Fensterscheibe 12 anliegende Dichtungslippe 28a mit einer Beflockung 30a sowie einen außen vor der Fensterscheibe 12 liegenden Schenkel 28c auf. An der Innenseite dieses Schenkels liegt die Innenfläche des zugehörigen Schenkels 32a der Metalleinlage 32 frei und ist mit einer Beflockung 34 versehen. Diese Beflockungsschicht 34 auf der Metalleinlage 32 dient ebenfalls als Gleitfläche für die obere Außenseite der Fensterscheibe 12. Auch hier läßt sich erkennen, daß sich im Vergleich mit herkömmlichen Profilen, bei denen sich die Beflockung auf der Innenseite des Gummiprofils befand, ein verringerter Profilquerschnitt ergibt, d.h. die Fensterscheibe 12 kann relativ weit nach außen verlegt werden.

Die Beflockungen 22, 24, 30a, 30b und 34 können aus Polyester- oder Polyamid-Flocken bestehen, die durch einen Haftvermittler auf der Basis von Polyurethan auf der frei liegenden Fläche der haftmittelbeschichteten Metalleinlage gehalten werden. Die Metalleinlage kann wiederum aus einem Aluminium- oder Stahlband bestehen.

## Patentansprüche

1. Vorrichtung zur Führung und Abdichtung der Fensterscheibe (12) eines Kraftfahrzeuges
   a) mit einem Karosserie (14, 15, 26) des Kraftfahrzeuges befestigbaren Profil (16, 28) aus einem elastomeren Material,
   b) mit einer an der Fensterscheibe anliegenden Dichtungslippe (21) oder Hohlkammer (21a) des Profils (16, 28),
   c) mit einer Metalleinlage (20, 23) in dem Profil, und
   d) mit einer Beflockung (22, 24, 30a, 30b, 34), dadurch gekennzeichnet, daß
   e) die der Fensterscheibe (12) zugewandte freiliegende Oberfläche der Metalleinlage (20, 20b; 32, 32a) mit einer Beflockung (24; 34) versehen ist.

2. Vorrichtung nach Anspruch 1, dadurch gekennzeichnet, daß das Profil (16) und die Metalleinlage (20) U-Form haben, und daß die nach außen gerichtete Oberfläche der Metalleinlage (20, 20a) mit der Beflockung (24) versehen ist.

3. Vorrichtung nach Anspruch 1, dadurch gekennzeichnet, daß im Dachbereich des Fahrzeuges ein Profil (28) angeordnet ist, das die Oberkante der Scheibe (12) hält, abdichtet und führt, und daß eine freiliegende Innenfläche der Metalleinlage (32, 32a) mit der Beflockung (34) versehen ist.

4. Vorrichtung nach einem der Ansprüche 1 bis 3, dadurch gekennzeichnet, daß die Metalleinlage aus einem Aluminium- oder Stahlband mit Haftmittelbeschichtung besteht.

5. Vorrichtung nach einem der Ansprüche 1 bis 4, dadurch gekennzeichnet, daß die Beflockung aus Polyester oder Polyamid besteht.

6. Vorrichtung nach einem der Ansprüche 1 bis 5, dadurch gekennzeichnet, daß die Beflockung (24, 34) durch ein Haftmittel auf Polyurethan-Basis auf der freiliegenden Fläche der Metalleinlage (20, 20; 32, 32a) befestigt ist.

## Claims

1. Device for guiding and sealing a vehicle window sash (12), comprising:
   a) a profile (16, 28) of an elastomeric material, which can be fixed to the body (14, 15, 26) of the vehicle,
   b) a sealing lip (21) or hollow chamber (21a) of the profile (16, 28) resting against the window sash,
   c) a metal insert (20, 32) in the profile, and
   d) a flock coating (22, 24, 30a, 30b, 34), characterised in that
   e) the exposed surface of the metal insert (20, 20b; 32, 32a) facing the window sash (12) is provided with a flock coating (24; 34).

2. Device according to claim 1, characterised in that the profile (16) and the metal insert (20) are U-shaped, and that the surface of the metal insert (20, 20a) facing outwards is provided with the flock coating (24).

3. Device according to claim 1, characterised in that a profile (28), which holds, seals and guides the top edge of the sash (12), is disposed in the roof area of the vehicle, and that an exposed inner surface of the metal insert (32, 32a) is provided with the flock coating (34).

4. Device according to one of claims 1 to 3, characterised in that the metal insert consists of an aluminium or steel strip with an adhesive coating.

5. Device according to one of claims 1 to 4, characterised in that the flock coating consists of polyester or polyamide.

6. Device according to one of claims 1 to 5, characterised in that the flock coating (24, 34) is fixed to the exposed surface of the metal insert (20, 20b; 32, 32a) by means of a polyurethane-based adhesive.

## Revendications

1. Dispositif destiné à guider et à rendre étanche la vitre de la fenêtre (12) d'un véhicule automobile comprenant:
   a) un profilé (16, 28) en un matériau élastomère susceptible d'être fixé à la carrosserie (14, 15, 26) du véhicule automobile;
   b) une lèvre d'étanchéité (21) ou une chambre creuse (21a) du profilé (16, 28) s'appliquant à la vitre de la fenêtre;
   c) une pièce d'insertion métallique (20, 32) insérée dans le profilé et

d) un flocage (22, 24, 30a, 30b, 34),
caractérisé en ce que

e) la surface de la pièce métallique d'insertion (20, 20b; 32, 32a) dénudée et tournée vers la vitre de la fenêtre (12) est munie d'un flocage (24, 34).

2. Dispositif suivant la revendication 1, caractérisé en ce que le profilé (16) et la pièce d'insertion métallique (20) ont une forme en U et en ce que la surface de la pièce d'insertion métallique (20, 20a) qui est dirigée vers l'extérieur est munie d'un flocage (24).

3. Dispositif suivant la revendication 1, caractérisé en ce que dans la région du toit du véhicule est monté un profilé (28) qui maintient, rend étanche et guide le bord supérieur de la vitre (12) et en ce qu'une surface intérieure de la pièce d'insertion métallique (32, 32a), qui est dénudée, est munie du flocage (34).

4. Dispositif suivant l'une des revendications 1 à 3, caractérisé en ce que la pièce d'insertion métallique est constituée d'une bande d'aluminium ou d'acier ayant un revêtement d'agent adhésif.

5. Dispositif suivant l'une des revendications 1 à 4, caractérisé en ce que le flocage est en polyester ou en polyamide.

6. Dispositif suivant l'une des revendications 1 à 5, caractérisé en ce que le flocage (24, 34) est fixé par un agent adhésif à base de polyuréthanne sur la surface dénudée de la pièce d'insertion métallique (20, 20b; 32, 32a).

# FIG.1

# FIG.2

## FIG. 3